# EUROPEAN PATENT SPECIFICATION

(11) **EP 2 390 162 B1**
(45) Date of publication and mention of the grant of the patent: **13.11.2013**
(21) Application number: 10164440.9
(22) Date of filing: 31.05.2010
(51) Int. Cl.: B62D 1/10

(54) **Steering assembly**
Lenkanordnung
Ensemble de direction

(43) Date of publication of application: 30.11.2011
(60) Divisional application: 12169413.7
(73) Proprietor: Volvo Car Corporation, 405 31 Göteborg (SE)
(72) Inventor: Dramountanis, Alexander, 41258, Göteborg (SE); Karlsson, Henrik, 43138, Mölndal (SE)
(74) Representative: Widahl, Jenny Marie

(56) References cited:
- WO-A1-00/06440
- US-B1- 6 357 320
- US-B1- 6 457 743

## Description

### BACKGROUND OF THE INVENTION

A vehicle is generally provided with a steering assembly including a steering wheel and a steering column. When mounting the steering wheel to the steering column, the steering wheel is traditionally fixedly attached to the steering column, for instance by means of a bolt joint with bolts extending parallel to a longitudinal extension of the steering column, and the bolt heads are then covered by a sealing member, e.g. a lid. The sealing member often includes an air bag in order to protect the driver in case of an accident, such as a collision.

The above mounting procedure involves a plurality of steps and also results in a plurality of separate parts which have to be mounted separately in situ in the vehicle carrying the steering column.

In order to overcome at least some of the above disadvantages US 5 617 763 proposes a steering wheel which may be attached to a steering column by means of a cross bolt, i.e. a bolt extending perpendicularly to the longitudinal extension of the steering column. When the '763 steering wheel is attached to the steering column, the bolt is located at a portion of the steering wheel facing away from the driver. This implies that the '763 steering wheel may be produced as a one-piece assembly which, in turn, may simplify the assembly of the steering wheel and steering column.

Although the '763 steering assembly may enable efficient production of the steering wheel per se as well as the attachment of the steering wheel to the steering column, the '763 steering assembly has some disadvantages. For instance, the steering wheel is easily detached from the steering column by simply unscrewing the cross bolt. This makes the steering wheel susceptible to theft.

US6457743 discloses an apparatus (10) for use in a vehicle comprises a steering shaft (12) rotatable about a first axis (B) and an activatable lock (18) operatively coupled with the steering shaft for preventing rotation of the steering shaft. The lock (18) is deactivated by a key (19). A vehicle steering wheel (20) includes a hub portion (130) and is non-rotatably connected to the steering shaft (12) by the hub portion for joint rotation with the steering shaft. The apparatus (10) further comprises an inflatable vehicle occupant protection device (70) attached to the steering wheel (20). A movable member (200) blocks axial movement of the steering wheel (20) relative to the steering shaft (12). A housing (160) encircles a portion of the steering shaft (12) and the hub portion (130). The housing (16) includes at least one opening (194). The movable member (200), upon rotation of the steering wheel (20) relative to the housing (16), moves from a first position in which the movable member is not aligned with the opening (194) to a second position in which the movable member is aligned with the opening to permit access to the movable member.

### SUMMARY OF THE INVENTION

One object of the invention is to reduce or ameliorate at least one of the disadvantages of the prior art systems and/or methods, or to provide a useful alternative.

This object is achieved by steering assembly according to claim 1.

As such, the present invention relates to a steering assembly for a vehicle. The steering assembly comprises a steering wheel and a steering column wherein the steering wheel is rotatable from at least a first position to a second position. The steering wheel is attached to the steering column by means of an attachment assembly comprising a snap-on connection.

The steering assembly is configured such that, during a procedure of mounting said steering wheel to said steering column, said steering wheel is conducted toward said steering column until said snap-on connection is engaged.

In accordance with the invention, the steering assembly is configured such that
- when the steering wheel is in the first position, access to the snap-on connection from the environment ambient of the steering assembly is prevented, and
- when the steering wheel is in the second position, access to the snap-on connection from the environment ambient of the steering assembly is enabled.

A driver of a vehicle equipped with the steering assembly of the present invention may put the steering wheel in the first position when parking the vehicle to thereby prevent access to the snap-on connection. Since the aforesaid access is prevented, the possibility to remove the steering wheel from the steering column without damaging the steering wheel is reduced. Thus, with a steering assembly according to the present invention, the risk of having the steering wheel stolen may be reduced as compared to the risk for prior art steering assemblies.

Generally, the angular position of the steering wheel controls the position of at least one, often two, of the wheels of the vehicle. The first position of the steering wheel may preferably correspond to a position of the wheels wherein the wheels of the vehicle are aligned, i.e. pointing in a direction parallel to the longitudinal direction of the vehicle.

According to the present invention, the steering assembly may comprise a cavity in which at least a portion of the snap-on connection is located. The steering assembly may also comprise an access opening providing access to the portion of the snap-on connection from the environment ambient of the steering assembly. The steering assembly may further comprise a cover means adapted to cover the access opening when the steering wheel is in the first position.

According to the present invention, the cavity and the access opening may be located in the steering wheel.

According to the present invention, the attachment assembly may further comprise a tightening device which in turn comprises a steering column tightening surface and a steering wheel tightening surface. The tightening device may further comprise a tightening member adapted to abut against the steering column tightening surface as well as the steering wheel tightening surface to thereby tighten the steering wheel to the steering column.

According to the present invention, the steering column tightening surface may be constituted by at least a portion of a tightening groove in the steering column.

According to the present invention, the steering column may extend in a longitudinal direction and the steering column tightening surface may extend in a surface direction, the surface direction forming an oblique angle with the longitudinal direction. Moreover, according to the present invention, a smallest angle between the longitudinal direction and the surface direction, may be within the range of 45° to 89°, preferably within the range of 55° to 80, more preferred approximately 70 °.

By arranging the surface direction in an oblique angle as discussed hereinabove, reaction forces in two directions, namely in the longitudinal direction of the steering column as well as a direction perpendicular to the aforesaid longitudinal direction, may be obtained between the steering column and the tightening member. As a consequence of the reaction forces in the two directions, the risk of having a play between the steering column and the steering wheel in either of the two directions is significantly reduced. Thus, a tight a lock is obtained between the steering column and the steering wheel.

According to the present invention, the tightening member may be elongate and comprise a tapered portion. The tapered portion may result in increasing contact forces between the steering column and the tightening member the more the tightening member is drawn towards the steering column tightening surface.

According to the present invention, the tightening member may comprise a member threaded portion adapted to engage with a threaded portion of the steering column and/or steering wheel.

A second aspect of the present invention relates to a vehicle comprising a steering assembly according to the first aspect of the present invention.

A third aspect of the present invention relates to a method of mounting and dismounting a steering wheel from a steering column in a steering assembly. The steering wheel is attached to the steering column by means of an attachment assembly comprising a snap-on connection. The steering assembly is configured such that, during a procedure of mounting said steering wheel to said steering column, said steering wheel is conducted toward said steering column until said snap-on connection is engaged.The steering wheel is rotatable between at least a first position and a second position. The method comprises the steps of:
- ensuring that the steering wheel is in the second position, and
- disengaging the snap-on connection.

According to the second aspect of the present invention, the steering assembly may comprise a steering lock and the method may further comprise the following steps:
- determining whether the steering wheel is in the second position or not;
- if not, disengaging the steering lock, and
- rotating the steering wheel to the second position.

### BRIEF DESCRIPTION OF THE DRAWINGS

The present invention will hereinafter be explained in greater detail by means of nonlimiting examples and with reference to the appended drawings in which:
- Fig. 1: illustrates a vehicle with a steering assembly of the present invention;
- Fig. 2: illustrates a steering assembly according to the present invention prior to the attachment of the steering wheel to the steering column;
- Fig. 3: is a partial cross section of a portion of a steering assembly of the invention illustrating a first implementation of an attachment assembly, the steering wheel of the steering assembly being located in a first position;
- Fig. 4: illustrates the Fig. 3 steering assembly wherein the steering wheel is located in a second position;
- Fig. 5: is a partial cross section of a portion of a steering assembly of the invention illustrating a second implementation of an attachment assembly;
- Fig. 6: is a side view of the Fig. 5 embodiment illustrating an access opening of the assembly;
- Fig. 7: is a side view schematically illustrating a steering column and a snap-on connection;
- Fig. 8: is the Fig. 7 side view but also illustrating a tightening device, and
- Fig. 9: illustrates contact forces obtained by the Fig. 8 tightening device.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

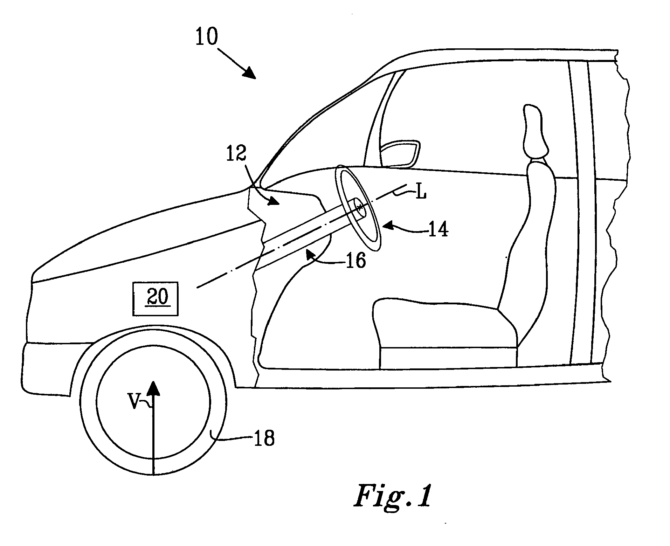

Fig. 1 illustrates a vehicle 10 comprising a steering assembly 12. The steering assembly comprises a steering wheel 14 and a steering column 16. The steering column 16 is in turn connected to at least one, but generally at least two, of the road wheels 18 of the vehicle 10 by a connection arrangement 20. The road wheels 18 thus connected to the steering column 16 will hereinafter be referred to as steered road wheels. The above connection arrangement 20 may for instance be a rack and pinion connection arrangement (not shown) and/or a power steering connection arrangement (not shown) for instance using a hydraulic power steering or an electric power steering.

The steering column 16 generally extends in a longitudinal direction L and the steering wheel 14 is rotatable around an axis of rotation which axis generally coincides with the longitudinal direction L. A rotation of the steering wheel 14 around the aforesaid axis of rotation results in a rotation of the steered road wheels 18 around a substantially vertically extending axis of rotation V.

Thus, the steering wheel 14 is rotatable from at least a first position to a second position. Generally, the steering wheel 14 is rotatable such that it can assume an infinite number of positions since the steering wheel 14 often is continuously rotatable around the axis of rotation.

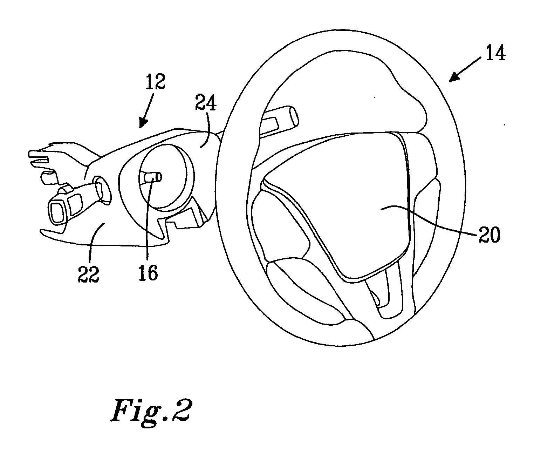

Fig. 2 illustrates a portion of a steering wheel assembly of the present invention. The Fig. 2 steering wheel 14 comprises an air bag module 20 and the Fig. 2 steering wheel 14 may be referred to as a one-piece assembly since the steering wheel 14 is assembled prior to being attached to the steering column 16. Fig. 2 further illustrates a steering wheel module 22. The Fig. 2 steering wheel module 22 comprises a cover means 24 which, in the Fig. 2 implementation, is a cover panel which preferably may be made of a metal and/or a plastics material.

The steering wheel 14 further comprises an opening (not shown in Fig. 2) adapted to receive at least a portion of the steering column 16. Fig. 2 illustrates the steering assembly 12 when the steering wheel is about to be mounted to the steering column 16.

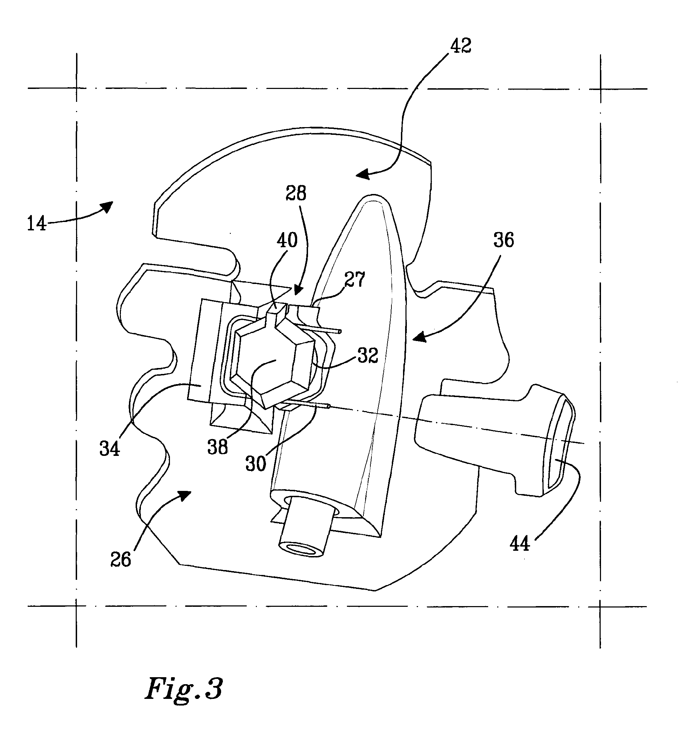

Fig. 3 illustrates the Fig. 2 steering assembly when the steering wheel 14 has been attached to the steering column 16. In Fig. 3 the air bag module 20 has been deleted such that an attachment assembly 26 for attaching the steering wheel 14 to the steering column16 is shown. An upper portion of the steering column 16 - which portion may be referred to as a steering pivot - extends through an opening 27 of the steering wheel 14.

As may be gleaned from Fig. 3, the attachment assembly 26 comprises a snap-on connection 28. In the embodiment illustrated in Fig. 3, the snap-on connection 28 comprises a clip 30 adapted to engage with a groove 32 in the steering column 16. However, in other implementations of the snap-on connection 28, the steering column 14 may for instance be furnished with one or more flexible hooks (not shown) adapted to engage with a groove (not shown) of the steering wheel 14.

The Fig. 3 clip 30 may be made of metal, for instance spring steel, and/or a plastics material. Moreover, in Fig. 3 the clip 30 is fixedly attached to the steering wheel 14. The clip 30 may for instance be fixedly attached to an internal bracket 34 of the steering wheel 14 by means of a rivet joint. However, in other implementations of the snap-on connection 28, other types of joints may be used, such as glue joints or weld joints (not shown).

The Fig. 3 attachment assembly 26 further comprises a tightening device 36 which will be described more thoroughly hereinbelow. It should be noted that in some implementations of the attachment assembly 26 of the present invention, the tightening device 36 may be omitted such that the attachment assembly 26 contains only the above-mentioned snap-on connection 28.

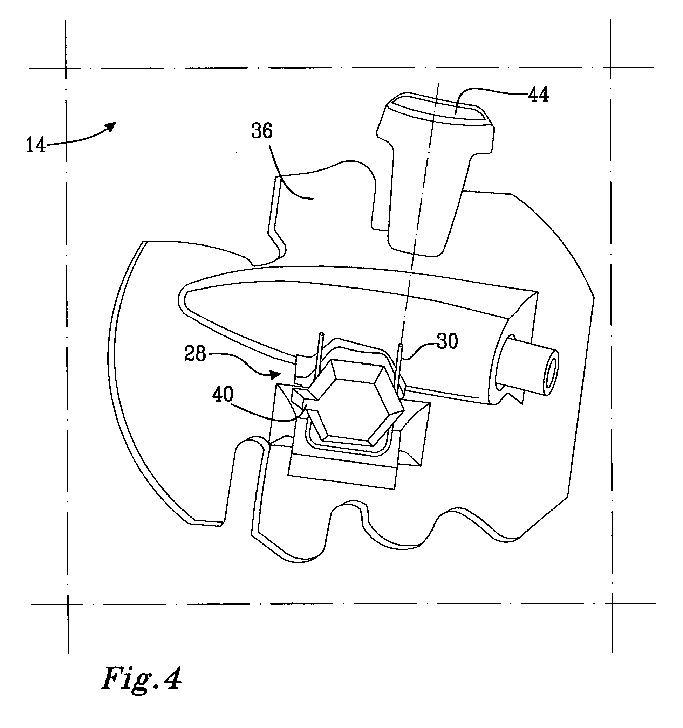

The steering assembly 14 illustrated in Fig. 4 may preferably be mounted using the following procedural steps.

Firstly the steering wheel 14 is moved towards the steering column 16 such that the upper portion of the steering column 16 is inserted into the opening 27 of the steering wheel 14. In order to facilitate the above insertion, the topmost portion 38 of the steering column 16 is preferably chamfered. Moreover, each one of at least the upper portion of the steering column 16 and the steering wheel opening 27 preferably has an asymmetrical cross-section in order to assure that the steering wheel 14 is attached to the steering column 16 at a desired angular position of the steering wheel 14. The desired angular position may preferably a position corresponding to aligned steered road wheels 18 of the vehicle 10, i.e. the road wheels 18 are in a position resulting in substantially no lateral displacement of the vehicle 10 when driving.

In the Fig. 3 implementation the previously discussed asymmetry is obtained by providing the steering column 16 with a longitudinally extending ledge 40 extending over at least the end portion of the steering column 16. The steering wheel opening 27 is consequently provided with a longitudinally extending groove such that the steering wheel 14 can only fit the steering column 16 when having a predetermined angular position in relation to the steering column 16.

When the steering column 16 has been at least partially inserted into the steering wheel opening 27, the steering wheel 14 is conducted further towards the steering column 16 until the clip 30 engages with the groove 32, i.e until the snap-on connection 28 is engaged.

When the snap-on connection 28 is in a locked condition, the steering wheel 14 is prevented from being displaced at least in the longitudinal direction L in relation to the steering column 16. The engagement of the snap-on connection 28 will generally produce a clicking sound when locking and this clicking sound will inform an installer that the steering wheel 14 is in place.

The snap-on connection 28 per se may in some embodiments of the steering assembly 12 result in a sufficiently safe locking between the steering wheel 14 and the steering column 16. In implementations of the attachment assembly 26 also comprising a tightening device 36, the snap-on connection 28 may be used to ensure that the steering wheel 14 is in an appropriate position in relation to the steering column 16 before the tightening device 36 is to be installed and tightened. Should such a tightening device 36 malfunction in some way during use of the steering assembly 12, the snap-on connection 28 will ensure that the steering wheel 14 is nevertheless held in place on the steering column 16.

If the steering wheel 14 is to be removed from the steering column 16, a possible tightening device 36 is firstly untightened. Then, the snap-on connection 28 must be disengaged before the steering wheel 14 can be removed from the steering column 16. However, in order to make theft of the steering wheel 14 more difficult, the steering assembly of the present invention is configured such that:
- when the steering wheel 14 is in the first position, access to the snap-on connection 28 from the environment ambient of the steering assembly 12 is prevented, and
- when the steering wheel 14 is in the second position, access to the snap-on connection 18 from the environment ambient of the steering assembly 12 is enabled.

Examples of how the above function may be obtained will be explained in the following.

The steering assembly 12 preferably comprises a cavity 42 in which at least a portion of the snap-on connection 28 is located. In the embodiment illustrated in Fig. 3, the cavity 42 is provided within the steering wheel 14. The steering assembly 12 further comprises an access opening 44 - in the Fig. 3 implementation the access opening 44 is also located in the steering wheel 14 -which access opening 44 provides access to a portion of the snap-on connection 28 from the environment ambient of the steering assembly 12.

The type of access required from the ambient environment to the snap-on connection 28 may depend *inter alia* on the implementation of the snap-on connection 28. In Fig. 3, the snap-on connection 38 comprises a substantially U-shaped clip 30 with two legs 30', 30". Thus, the access required in the Fig. 3 case may be that a pair of tongs can be at least partially inserted through the access opening such that the two legs 30', 30" may be forced away from the steering column 16 such that the steering wheel 14 thereafter may be removed. However, in order to prevent, or at least substantially delay, unauthorized removal of the steering wheel 14, the steering assembly 12 preferably comprises a cover means 24 adapted to cover the access opening 44 when the steering wheel 14 is in the first position. Preferably, and as previously discussed, the cover means 24 may form a part of the steering wheel module 22 and the cover means 24 may preferably be a cover panel which preferably may be made of a metal or a plastics material.

The first position of the steering wheel 14 is preferably a position corresponding to a neutral position of the steered road wheels 18, i.e. the steered road wheels 18 are pointing in the longitudinal direction of the vehicle 10. This is since the above position of the steered road wheels 18 is a usual position for the wheels 18 when a driver of the vehicle 10 parks the vehicle. In order to rotate the steering wheel 14 from the first position, a steering lock generally firstly has to be disengaged, which disengagement often requires the use of the ignition key (not shown) of the vehicle 10.

Fig. 4 illustrates the Fig. 3 steering assembly when the steering wheel 14 has been rotated to the second position. Since the cover means 24 of the steering wheel module 22 does not extend up to the access opening 44 when the steering wheel 14 is in the second position, access from the ambient environment to the snap-on connection 28 is enabled.

The steering wheel 14 of the steering assembly 12 illustrated in Fig. 3 and Fig. 4 may be dismounted by following the procedure as described hereinbelow.

Firstly, it is ensured that the steering wheel 14 is in the first position as indicated in Fig. 3 or at least in a position close to the first position. The tightening device 36 is then untightened by a tool, such as a screw driver, which is inserted through a tool opening through the steering wheel 14 and/or through the steering wheel module (not shown in Fig. 3).

When the tightening device 36 has been untightened, the steering wheel 14 is rotated to the second position, as indicated in Fig. 4. If the steering assembly 12 comprises a steering lock (not shown in Fig. 3 or 4), such a lock firstly has to be disengaged prior to imparting the above rotation to the steering wheel 14. Generally, the disengagement of the steering wheel 14 is carried out by actuating the ignition lock, e.g. inserting the ignition key and possibly rotating the key to a position in which the steering lock is disengaged.

When the steering wheel 14 is in the second position, an actuator - such as a tool or even at least one finger of the person performing the dismounting - may be inserted into the access opening 44 and guided towards at least a portion of the snap-on connection 28, viz the clip 30 of the connection 28 in Fig. 4. The snap-on connection 28 is then disengaged, in the implementation if the connection 28 illustrated in Fig. 4 this is achieved by deflecting the legs 30', 30" outwardly from the steering column 16. When the snap-on connection 28 is in its disengaged position, the steering wheel 14 is moved in a direction away from the steering column 16 and the steering wheel 14 is subsequently released from the steering column 16.

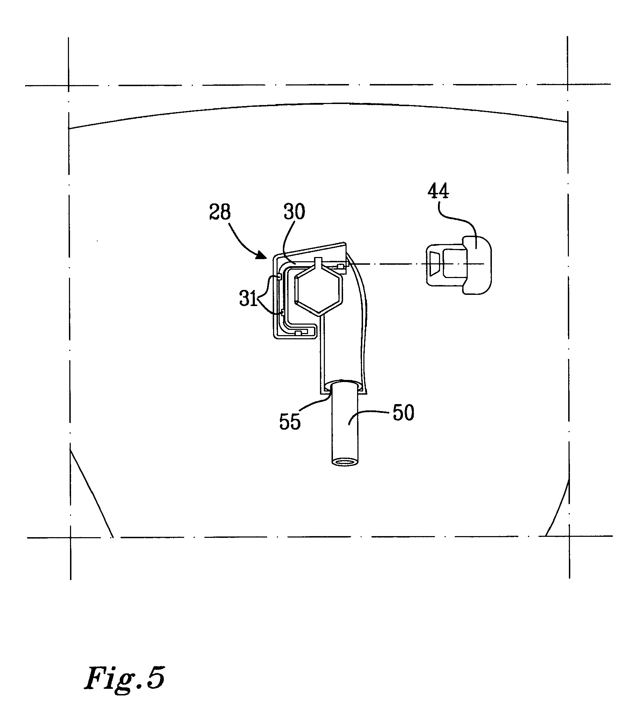

Fig. 5 illustrates another embodiment of the present invention. The snap-on connection 28 of the Fig. 5 embodiment comprises a substantially L-shaped clip 30 which in turn is connected to the steering wheel 14 by means of a second snap-on connection 31. Optionally, the clip 30 may be an integral part of the steering wheel 14. The Fig. 5 clip 30 may be made of metal, for instance spring steel, and/or a plastics material.

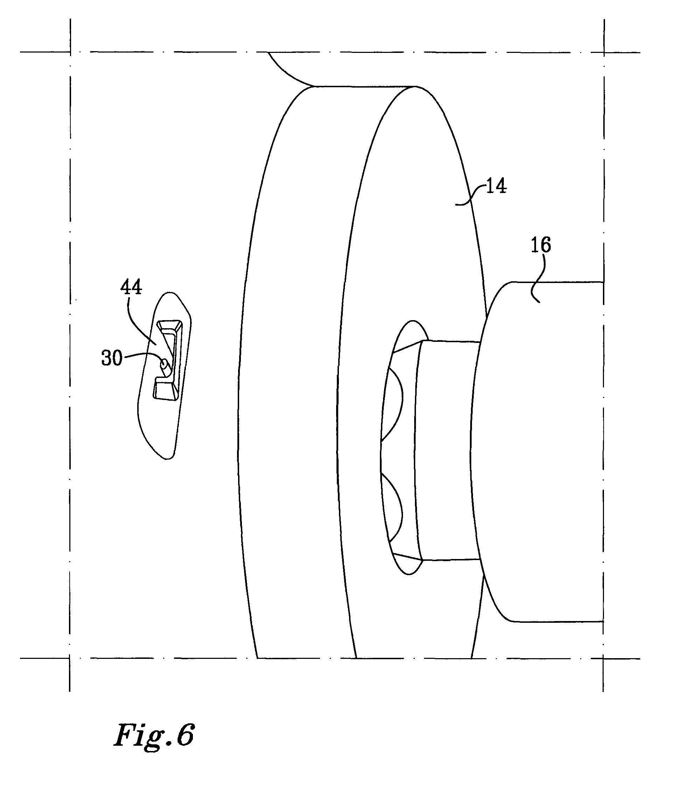

Fig. 6 illustrates a side view of the Fig. 5 embodiment wherein the steering wheel module 22 has been omitted for the sake of clarity. As may be gleaned from Fig. 6, access to the clip 30 via the access opening 44 is enabled.

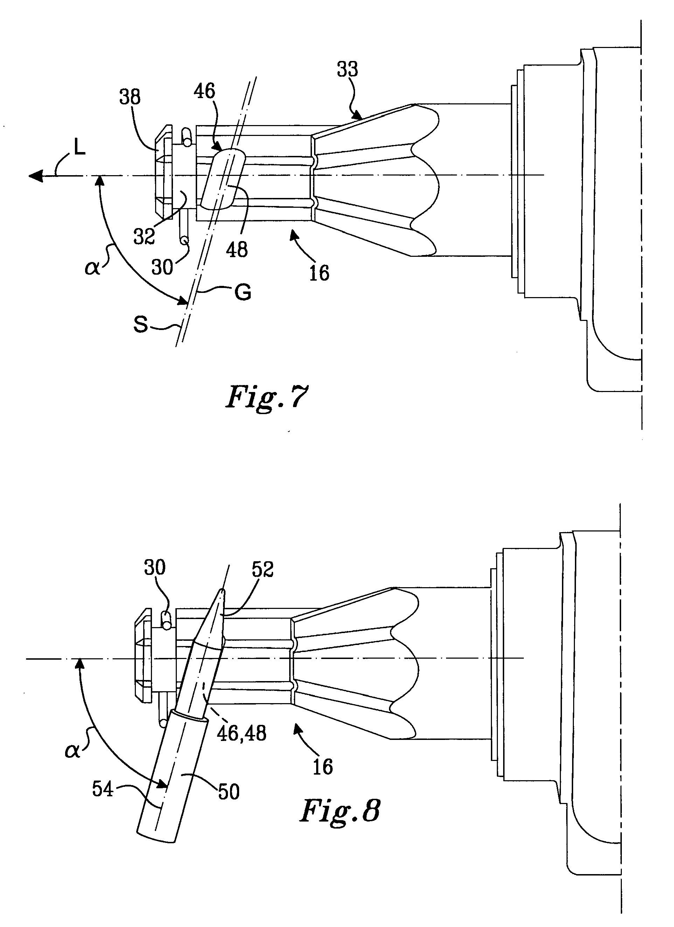

Fig. 7 illustrates a preferred implementation of a steering column 16 of the steering assembly of the present invention. The Fig. 7 steering column 16 has a topmost chamfered portion 38 and a groove 32 for receiving the clip 30 of the steering wheel 14. Purely by way of example, the groove may be circumferentially extending around the steering column 16 but in other implementations of the steering column 16, the groove 32 may extend only through a portion of the circumference of the steering column 16.

The steering column 16 preferably comprises a frustoconical portion 33 adapted to abut against a portion of the steering wheel (not shown in Fig. 7) when assembled to thereby obtain a tight lock between the steering column 16 and the steering wheel when mounted.

Moreover, the Fig. 7 steering column 16 comprises a steering column tightening surface 46 which, in the Fig. 7 implementation, is the surface of a tightening groove 48 in the steering column 16. However, in other implementations of the steering column 16, the tightening groove may be at least a portion of a bore (not shown) extending through the steering column 16.

The Fig. 7 tightening groove 48 extends in a groove direction G and the steering column tightening surface 46 consequently extends in a surface direction S coinciding with the groove direction G. The steering column 16 extends in a longitudinal direction L and the surface direction S forms an oblique angle with the longitudinal direction L. As such, the smallest angle α between the longitudinal direction L and the surface direction S may be within the range of 45°to 89°, preferably within the range of 55°to 80°, more preferred approximately 70°.

However, in other embodiments of the present invention, the surface direction S may extend substantially perpendicularly to the longitudinal direction L.

Fig. 8 illustrates the Fig. 7 steering column 16 when a tightening member 50 has been inserted into the tightening groove 48. The Fig. 8 tightening member 50 is elongate and comprises a tapered portion 52. In the Fig. 8 implementation, the tapered portion 52 terminates the tightening member 50 but other locations of the tapered portion 52 on the tightening device may also be suitable. The tapered portion 52 may for instance have a conical or frustoconical shape.

A base portion 54 of the tightening member 50 is adapted to abut a steering wheel tightening surface (not shown in Fig. 8). The steering wheel tightening surface may be at least a portion of a steering wheel opening (not shown) in the steering wheel (not shown). Such a steering wheel opening may preferably be provided with internal threads adapted to engage with external threads (not shown) of the base portion 54. An example of a steering wheel opening 55 is illustrated in Fig. 5.

With a tightening member 50 with a tapered portion 52, a tighter lock between the steering column 16 and the steering wheel is obtained the longer the tightening member 50 is introduced in the tightening groove 48, e.g. by screwing of the tightening member 50.

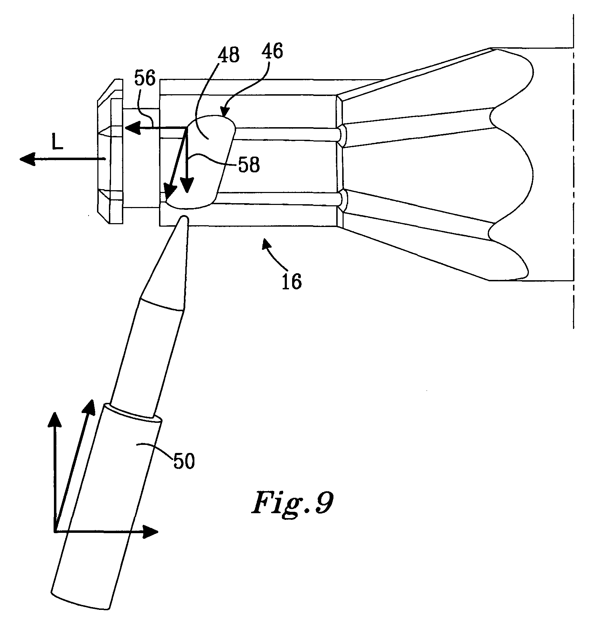

Moreover, since the Fig. 8 tightening groove 48 forms an oblique angle with the longitudinal direction L of the steering column 16, contact forces in two force directions 56, 58 are obtained between the steering column 16 and the steering wheel when the tightening member 50 is tightened against the tightening groove 48, see Fig. 9.

As may be gleaned from Fig. 9, the first force direction 56 extends in a direction parallel to the longitudinal direction L whereas the second forces direction 58 extends perpendicularly to the longitudinal direction L. Since the above contact forces are obtained, a possible play between the steering column and the steering wheel in the longitudinal direction as well as a direction perpendicular to the longitudinal direction may be kept to a minimum when the tightening member 50 is tightened against the tightening groove 48.

It should be noted that the tightening device 36 presented hereinabove with reference to Fig. 7 to Fig. 9 could also be used in an attachment assembly which do not comprise a snap-on connection. For instance, in some embodiments of the steering assembly 12, the steering wheel 14 may be attached to the steering column 16 by means of a tightening device 36 only. Preferably, such a tightening device 36 comprises a surface direction S forming an oblique angle with the longitudinal direction L, more preferred wherein the smallest angle α between the longitudinal direction L and the surface direction S lies within the range of 45°to 89°, preferably within the range of 55°to 80°, more preferred approximately 70°.

While there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A steering assembly (12) for a vehicle, said steering assembly (12) comprising a steering wheel (14) and a steering column (16), said steering wheel (14) being rotatable from at least a first position to a second position, said steering wheel (14) being attached to said steering column (16) by means of an attachment assembly (26) comprising a snap-on connection (28), **characterized in that** said steering assembly (12) is configured such that, during a procedure of mounting said steering wheel (14) to said steering column (16), said steering wheel (14) is conducted towards said steering column (16) until said snap-on connection (28) is engaged, said steering assembly (12) further being configured such that
- when said steering wheel (14) is in said first position, access to said snap-on connection (28) from the environment ambient of said steering assembly (12) is prevented, and
- when said steering wheel (14) is in said second position, access to said snap-on connection (28) from the environment ambient of said steering assembly (12) is enabled.

2. The steering assembly (12) according to claim 1, wherein said steering assembly (12) comprises a cavity (42) in which at least a portion of said snap-on connection (28) is located, said steering assembly (12) comprising an access opening (44) providing access to said portion of said snap-on connection (28) from the environment ambient of said steering assembly (12), said steering assembly further comprising a cover means (24) adapted to cover said access opening (44) when said steering wheel (14) is in said first position.

3. The steering assembly (12) according to claim 2, wherein said cavity (42) and said access opening (44) are located in said steering wheel (14).

4. The steering assembly (12) according to any one of the preceding claims, wherein said attachment assembly (26) further comprises a tightening device (36) which in turn comprises a steering column tightening surface (46) and a steering wheel tightening surface (55), said tightening device (36) further comprises a tightening member (50) adapted to abut against said steering column tightening surface (36) as well as said steering wheel tightening surface (55) to thereby tighten said steering wheel (14) to said steering column (16).

5. The steering assembly (12) according to claim 4, wherein said steering column tightening surface (46) is constituted by at least a portion of a tightening groove (48) in said steering column (16).

6. The steering assembly (12) according to claim 4 or 5, wherein said steering column (16) extends in a longitudinal direction (L) and said steering column tightening surface (46) extends in a surface direction (S), said surface direction (S) forming an oblique angle with said longitudinal direction (L).

7. The steering assembly (12) according to claim 6, wherein a smallest angle (α) between said longitudinal direction (L) and said surface direction (S), is within the range of 45 ° to 89°, preferably within the range of 55° to 80°, more preferred approximately 70°.

8. The steering assembly (12) according to any one of claims 4 to 7, wherein said tightening member (50) is elongate and comprises a tapered portion (52).

9. The steering assembly (12) according to any one of claims 4 to 8, wherein said tightening member (50) comprises a member threaded portion (54) adapted to engage with a threaded portion of said steering column (16) and/or said steering wheel (14).

10. A vehicle (10) comprising a steering assembly (12) according to any one of the preceding claims.

11. A method of mounting and dismounting a steering wheel (14) from a steering column (16) in a steering assembly (12), said steering wheel (14) being attached to said steering column (16) by means of an attachment assembly (26) comprising a snap-on connection (28), said steering assembly (12) being configured such that, during a procedure of mounting said steering wheel (14) to said steering column (16), said steering wheel (14) is conducted towards said steering column (16) until said snap-on connection (28) is engaged, said steering wheel (14) being rotatable from at least a first position to a second position, said method comprising the steps of:
- ensuring that said steering wheel is in said second position, and
- disengaging said snap-on connection (28).

12. The method according to claim 11, wherein said steering assembly (12) comprises a steering lock and said method further comprises the following steps:
- determining whether said steering wheel (14) is in said second position or not;
- if not, disengaging said steering lock, and
- rotating said steering wheel (14) to said second position.

## Patentansprüche

1. Lenkanordnung (12) für ein Fahrzeug, wobei die Lenkanordnung (12) ein Lenkrad (14) und eine Lenksäule (16) umfasst, wobei das Lenkrad (14) aus mindestens einer ersten Position in eine zweite Position drehbar ist, wobei das Lenkrad (14) durch eine Befestigungsanordnung (26), die eine Schnappverbindung (28) umfasst, an der Lenksäule (16) befestigt ist, **dadurch gekennzeichnet, dass** die Lenkanordnung (12) so konfiguriert ist, dass das Lenkrad (14) während eines Vorgangs der Montage des Lenkrads (14) an die Lenksäule (16) zur Lenksäule (16) hin geführt wird, bis die Schnappverbindung (28) in Eingriff steht, wobei die Lenkanordnung (12) ferner so konfiguriert ist, dass,
- wenn sich das Lenkrad (14) in der ersten Position befindet, der umliegenden Zugang zur Schnappverbindung (28) von der umliegenden Umgebung der Lenkanordnung (12) verhindert wird, und
- wenn sich das Lenkrad (14) in der zweiten Position befindet, der Zugang zur Schnappverbindung (28) von der umliegenden Umgebung der Lenkanordnung (12) ermöglicht wird.

2. Lenkanordnung (12) nach Anspruch 1, wobei die Lenkanordnung (12) einen Hohlraum (42) umfasst, in dem mindestens ein Teil der Schnappverbindung (28) positioniert ist, wobei die Lenkanordnung (12) eine Zugangsöffnung (44) umfasst, die Zugang zu dem Teil der Schnappverbindung (28) von der umliegenden Umgebung der Lenkanordnung (12) bereitstellt, wobei die Lenkanordnung ferner ein Abdeckmittel (24) umfasst, das dazu ausgeführt ist, die Zugangsöffnung (44) abzudecken, wenn sich das Lenkrad (14) in der ersten Position befindet.

3. Lenkanordnung (12) nach Anspruch 2, wobei der Hohlraum (42) und die Zugangsöffnung (44) im Lenkrad (14) positioniert sind.

4. Lenkanordnung (12) nach einem der vorhergehenden Ansprüche, wobei die Befestigungsanordnung (26) ferner eine Anziehvorrichtung (36) umfasst, die wiederum eine Lenksäulenanziehfläche (46) und eine Lenkradanziehfläche (55) umfasst, wobei die Anziehvorrichtung (36) ferner ein Anzugglied (50) umfasst, das dazu ausgeführt ist, gegen die Lenksäulenanziehfläche (36) sowie die Lenkradanziehfläche (55) anzuliegen, um somit das Lenkrad (14) an der Lenksäule (16) festzuziehen.

5. Lenkanordnung (12) nach Anspruch 4, wobei die Lenksäulenanziehfläche (46) durch mindestens einen Teil einer Anziehnut (48) in der Lenksäule (16) gebildet ist.

6. Lenkanordnung (12) nach Anspruch 4 oder 5, wobei sich die Lenksäule (16) in einer Längsrichtung (L) erstreckt und sich die Lenksäulenanziehfläche (46) in einer Flächenrichtung (S) erstreckt, wobei die Flächenrichtung (S) einen schiefen Winkel mit der Längsrichtung (L) bildet.

7. Lenkanordnung (12) nach Anspruch 6, wobei ein kleinster Winkel (α) zwischen der Längsrichtung (L) und der Flächenrichtung (S) im Bereich von 45° bis 89°, vorzugsweise im Bereich von 55° bis 80°, besonders bevorzugt bei ungefähr 70°, liegt.

8. Lenkanordnung (12) nach einem der Ansprüche 4 bis 7, wobei das Anziehglied (50) länglich ist und einen kegelförmigen Abschnitt (52) umfasst.

9. Lenkanordnung (12) nach einem der Ansprüche 4 bis 8, wobei das Anziehglied (50) einen Glied-Gewindeabschnitt (54) umfasst, der dazu ausgeführt ist, in einen Gewindeabschnitt der Lenksäule (16) und/oder des Lenkrads (14) einzugreifen.

10. Fahrzeug (10), das eine Lenkanordnung (12) nach einem der vorhergehenden Ansprüche umfasst.

11. Verfahren zum Montieren und Demontieren eines Lenkrads (14) an/von einer Lenksäule (16) in einer Lenkanordnung (12), wobei das Lenkrad (14) durch eine Befestigungsanordnung (26), die eine Schnappverbindung (28) umfasst, an der Lenksäule (16) befestigt ist, wobei die Lenkanordnung (12) so konfiguriert ist, dass das Lenkrad (14) während eines Vorgangs der Montage des Lenkrads (14) an die Lenksäule (16) zur Lenksäule (16) hin geführt wird, bis die Schnappverbindung (28) in Eingriff steht, wobei das Lenkrad (14) aus mindestens einer ersten Position in eine zweite Position drehbar ist, wobei das Verfahren die folgenden Schritte umfasst:
- Sicherstellen, dass sich das Lenkrad in der zweiten Position befindet, und
- Lösen der Schnappverbindung (28).

12. Verfahren nach Anspruch 11, wobei die Lenkanordnung (12) ein Lenkradschloss umfasst und das Verfahren ferner die folgenden Schritte umfasst:
- Bestimmen, ob sich das Lenkrad (14) in der zweiten Position befindet oder nicht;
- falls nicht, Lösen des Lenkradschlosses, und
- Drehen des Lenkrads (14) in die zweite Position.

## Revendications

1. Ensemble de direction (12) pour un véhicule, ledit ensemble de direction (12) comprenant un volant de direction (14) et une colonne de direction (16), ledit volant de direction (14) pouvant tourner d'au moins une première position à une deuxième position, ledit volant de direction (14) étant fixé à ladite colonne de direction (16) au moyen d'un ensemble de fixation (26) comprenant un raccord à encliquetage (28), **caractérisé en ce que** ledit ensemble de direction (12) est configuré de telle sorte que, lors d'une procédure de montage dudit volant de direction (14) sur ladite colonne de direction (16), ledit volant de direction (14) est dirigé vers ladite colonne de direction (16) jusqu'à ce que ledit raccord à encliquetage (28) soit encliqueté, ledit ensemble de direction (12) étant en outre configuré de telle sorte que
- lorsque ledit volant de direction (14) est dans ladite première position, il n'est pas possible d'accéder audit raccord à encliquetage (28) depuis la zone entourant ledit ensemble de direction (12), et
- lorsque ledit volant de direction (14) est dans ladite deuxième position, il est possible d'accéder audit raccord à encliquetage (28) depuis la zone entourant ledit ensemble de direction (12).

2. Ensemble de direction (12) selon la revendication 1, ledit ensemble de direction (12) comprenant une cavité (42) dans laquelle est située au moins une partie dudit raccord à encliquetage (28), ledit ensemble de direction (12) comprenant une ouverture d'accès (44) donnant accès à ladite partie dudit raccord à encliquetage (28) depuis la zone entourant ledit ensemble de direction (12), ledit ensemble de direction comprenant en outre un moyen de couverture (24) conçu pour recouvrir ladite ouverture d'accès (44) lorsque ledit volant de direction (14) est dans ladite première position.

3. Ensemble de direction (12) selon la revendication 2, ladite cavité (42) et ladite ouverture d'accès (44) étant situées dans ledit volant de direction (14).

4. Ensemble de direction (12) selon l'une quelconque des revendications précédentes, ledit ensemble de fixation (26) comprenant en outre un dispositif de serrage (36) qui comprend pour sa part une surface de serrage de colonne de direction (46) et une surface de serrage de volant de direction (55), ledit dispositif de serrage (36) comprenant en outre un organe de serrage (50) conçu pour buter contre ladite surface de serrage de colonne de direction (36) ainsi que ladite surface de serrage de volant de direction (55) pour ainsi serrer ensemble ledit volant de direction (14) et ladite colonne de direction (16).

5. Ensemble de direction (12) selon la revendication 4, ladite surface de serrage de colonne de direction (46) étant constituée par au moins une partie d'une rainure de serrage (48) dans ladite colonne de direction (16).

6. Ensemble de direction (12) selon la revendication 4 ou 5, ladite colonne de direction (16) s'étendant dans une direction longitudinale (L) et ladite surface de serrage de colonne de direction (46) s'étendant dans une direction de surface (S), ladite direction de surface (S) formant un angle oblique avec ladite direction longitudinale (L).

7. Ensemble de direction (12) selon la revendication 6, un angle minimum (α) entre ladite direction longitudinale (L) et ladite direction de surface (S) étant dans la plage allant de 45° à 89°, de préférence dans la plage allant de 55° à 80°, plus préférablement d'environ 70°.

8. Ensemble de direction (12) selon l'une quelconque des revendications 4 à 7, ledit organe de serrage (50) étant allongé et comprenant une partie effilée (52).

9. Ensemble de direction (12) selon l'une quelconque des revendications 4 à 8, ledit organe de serrage (50) comprenant une partie filetée d'organe (54) conçue pour coopérer avec une partie filetée de ladite colonne de direction (16) et/ou dudit volant de direction (14).

10. Véhicule (10) comprenant un ensemble de direction (12) selon l'une quelconque des revendications précédentes.

11. Procédé pour monter un volant de direction (14) sur une colonne de direction (16) et l'en démonter dans un ensemble de direction (12), ledit volant de direction (14) étant fixé à ladite colonne de direction (16) au moyen d'un ensemble de fixation (26) comprenant un raccord à encliquetage (28), ledit ensemble de direction (12) étant configuré de telle sorte que, lors d'une procédure de montage dudit volant de direction (14) sur ladite colonne de direction (16), ledit volant de direction (14) est dirigé vers ladite colonne de direction (16) jusqu'à ce que ledit raccord à encliquetage (28) soit encliqueté, ledit volant de direction (14) pouvant tourner d'au moins une première position à une deuxième position, ledit procédé comprenant les étapes :
- s'assurer que ledit volant de direction est dans ladite deuxième position, et
- décliqueter ledit raccord à encliquetage (28).

12. Procédé selon la revendication 11, ledit ensemble de direction (12) comprenant un dispositif de verrouillage de la direction et ledit procédé comprenant en outre les étapes suivantes :
- déterminer si ledit volant de direction (14) est dans ladite deuxième position ou non ;
- si ce n'est pas le cas, désengager ledit dispositif de verrouillage de la direction, et
- faire tourner ledit volant de direction (14) jusqu'à ladite deuxième position.
